# EUROPEAN PATENT APPLICATION

(11) **EP 3 725 264 A1**
(43) Date of publication of application: **21.10.2020**
(21) Application number: 19169410.8
(22) Date of filing: 16.04.2019
(51) Int. Cl.: A61C 17/028, A61C 17/30, A61C 17/38, A46B 13/06, A46B 9/04, A61C 17/02

(54) **HYDRAULIC DRIVEN BRUSH - INTERDENTAL JET COMBINATION**

(71) Applicant: Koninklijke Philips N.V., 5656 AG Eindhoven (NL)
(72) Inventor: GOTTENBOS, Bart, 5656 AE Eindhoven (NL); JOHNSON, Mark Thomas, 5656 AE Eindhoven (NL)
(74) Representative: de Haan, Poul Erik

(57) **Abstract**

The invention relates to an oral cleaning system for cleaning teeth with a combination of brushing and interdental liquid cleaning. The oral cleaning system comprises a cleaning head with a hydraulic driven brush for brushing the teeth and an orifice for emitting fluid for interdental liquid cleaning. The oral cleaning system comprises further a support unit with a fluid reservoir for containing a fluid and a pump mechanism configured for pumping the fluid from the fluid reservoir through a first fluid channel to the cleaning head. The brush of the cleaning head is configured to be driven by a hydraulic motor empowered by the fluid, and a valve of the cleaning head is configured to emit at least a part of the fluid through the orifice for interdental liquid cleaning. The cleaning heads further comprises a second fluid channel configured for transporting at least a part of the fluid back from the hydraulic motor to the fluid reservoir of the support unit.

## Description

### FIELD OF THE INVENTION

The present invention relates to a cleaning head for an oral cleaning system for cleaning teeth with a combination of brushing and interdental liquid cleaning, a support unit for an oral cleaning system for cleaning teeth with a combination of brushing and interdental liquid cleaning, an oral cleaning system for cleaning teeth with a combination of brushing and interdental liquid cleaning, as well as a method.

### BACKGROUND OF THE INVENTION

Oral diseases such as gum disease or caries are often resulting from poor oral hygiene, people taking insufficient care to remove the dental plaque from their teeth. A particular problem for most is to take good care of the space between the teeth, as it needs additional effort to perform interdental cleaning on top of tooth brushing. Therefore, it would be very advantageous to have the interdental cleaning going on simultaneously while tooth brushing. Many patents are known in the art combining a power toothbrush (PTB) with an oral irrigation jet (01), aimed at cleaning the interdental space. It is known that irrigators and micro-droplet devices can perform interdental cleaning and deliver interdental gum health certainly as good as string floss. Therefore, such a combination can indeed be a welcome substitution for the regular power toothbrush. However, development of such a system that delivers all user requirements (e.g. handheld without tethers, compact, reliable) is a complicated technical challenge.

One of the big challenges in the development, manufacturing and reliability of a PTB-OI combination is combining the mechanical transfer of the PTB head movement and the transfer of the pressurized jet from the device handle to the head. The mechanical system is often heavily influenced by the fluid system and vice versa. Reliability issues often occur at fluidic connections and mechanical interfaces.

The problem becomes even more apparent in a multi-brush concept. While the mechanical energy transfer for a single brush can be relatively simple through a vibratory shaft (e.g. typically used with sonic power brushes), which when hollow can then also be used for liquid transfer, for multi surface brushes simple vibrational driving from the shaft may not bring sufficient energy into all brushing surfaces. Multi-surface brushes on the market require only for mechanical energy transfer already complicated, prone to failure systems.

The inventors of the present invention identified that it is another important aspect to strongly limit the amount of used fluid. Large liquid volumes represent the following disadvantages: the reservoir and the device gets heavy and bulky and this makes it difficult to handle. The alternative being a tethered solution is also unattractive to many consumers. Further, the amount of fluid in the mouth brings discomfort during use. This results in a need for spitting, splashing liquid, or to keep the mouth open over the sink. In addition, the fluid dilutes the fluoride from the toothpaste thus reducing the anti-caries activity.

To fluid dynamically clean the interdental space not much volume is required. In the state of the art known devices use 0.6ml per interdental space and in total 18ml for 30 interdental spaces. There might be even higher spray velocity settings found where similar efficacy is possible with even half that liquid volume.

In the state of the art many patens of hydraulic driven toothbrushes in combination with irrigation are known. Such a system limits the handle to head transfer of energy to one modality, which is pressurized liquid only. However, all these patented designs use a water tap connection to supply the hydraulic power.

Such water tap connected solutions have many disadvantages: For most users, this is far too complicated, as it requires a reliable connection to the water tap. Further, the fluid jetting discharge is continuous and therefore would use a lot of water, which brings additional disadvantages as explained above. In addition, the water tap pressure is variable, but most importantly limited to about 2 bar. Useful dental plaque removal only starts above 3 bar, with equivalent efficacy to mechanical floss or interdental brushes a jetting pressure larger than 5 bar, preferably larger than 7 bar is required, especially when using low liquid volumes. Even further, the cleaning is constrained to water, while it can be advantageous to use active agent solutions, for example fluoride solution to counteract the toothpaste dilution by the liquid.

An alternative solution of bringing only mechanical energy into the brush head and having a miniature liquid pump in the head driven by the head motion is also described in the state of the art. As the pump is only small, and brush motion energy limited, this solution can only deliver low energy irrigation, which is not sufficient for a full functionality like string floss.

For all these reasons identified by the inventors of the present invention it would be advantageous to have an oral cleaning system that combines brushing and interdental liquid cleaning that does not suffer from the above drawbacks.

### SUMMARY OF THE INVENTION

It is an object of the present invention to facilitate oral cleaning with a combination of a hydraulic driven brush and interdental liquid cleaning, which significantly reduces the amount of consumed fluid.

The object of the present invention is solved by the subject matter of the independent claims, wherein further embodiments are incorporated in the dependent claims.

The described embodiments similarly pertain to the cleaning head for an oral cleaning system for cleaning teeth with a combination of brushing and interdental liquid cleaning, the support unit for an oral cleaning system for cleaning teeth with a combination of brushing and interdental liquid cleaning, and the oral cleaning system for cleaning teeth with a combination of brushing and interdental liquid cleaning as well as the method. Synergetic effects may arise from different combinations of the embodiments although they might not be described in detail.

Further on, it shall be noted that all embodiments of the present invention concerning a method, might be carried out with the order of the steps as described, nevertheless this has not to be the only and essential order of the steps of the method. The herein presented methods can be carried out with another order of the disclosed steps without departing from the respective method embodiment, unless explicitly mentioned to the contrary hereinafter.

According to a first aspect of the invention, there is provided a cleaning head for an oral cleaning system for cleaning teeth with a combination of brushing and interdental liquid cleaning. The cleaning head comprises a brush for brushing the teeth, an orifice for emitting a fluid for interdental liquid cleaning, and a hydraulic motor for driving the brush. The cleaning head further comprises a first fluid channel configured for transporting the fluid from a support unit of the oral cleaning system to the hydraulic motor, when the cleaning head is attached to the support unit of the oral cleaning system, and a second fluid channel configured for transporting at least a part of the fluid back from the hydraulic motor to the support unit when the cleaning head is attached to the support unit of the oral cleaning system.

The cleaning head for an oral cleaning system uses a combination of brushing and interdental liquid cleaning for cleaning the teeth of a user. The brush is driven to effect a movement of the brush relative to the cleaning head and the oral cleaning system, thereby providing an effective cleaning of the surfaces of a tooth. However, this brush may not reach the interdental spaces between the teeth. Therefore, the cleaning head uses a jet of cleaning fluid emitted through the orifice thereby cleaning the interdental spaces. This cleaning can be just as effective as the use of string floss. The cleaning head is configured to be supplied just with pressurized fluid through a first fluid channel. This fluid drives a hydraulic motor positioned in the cleaning head, which transfers its movement to the brush. At least a part of the fluid can be emitted through the orifice for interdental liquid cleaning. The part of the fluid that was used for empowering the hydraulic motor, but that is not emitted through the orifice, is guided back to a support unit of the oral cleaning system through a second fluid channel in order to be preserved. Thereby, the cleaning head provides an efficient cleaning of the teeth and interdental spaces. The set-up is rather simple, as there is only the need to transport fluid from the support unit to the cleaning head and back again to the support unit. There is no need for additional transmission of mechanical energy in order to drive the brush. Further, the cleaning head saves fluid as only the part of the fluid is emitted, which is needed for interdental cleaning. Thus, an oral cleaning system with a cleaning head according to the invention can be compact and yet provide enough fluid for a complete cleaning session without the need for connecting the oral cleaning system to a water tap.

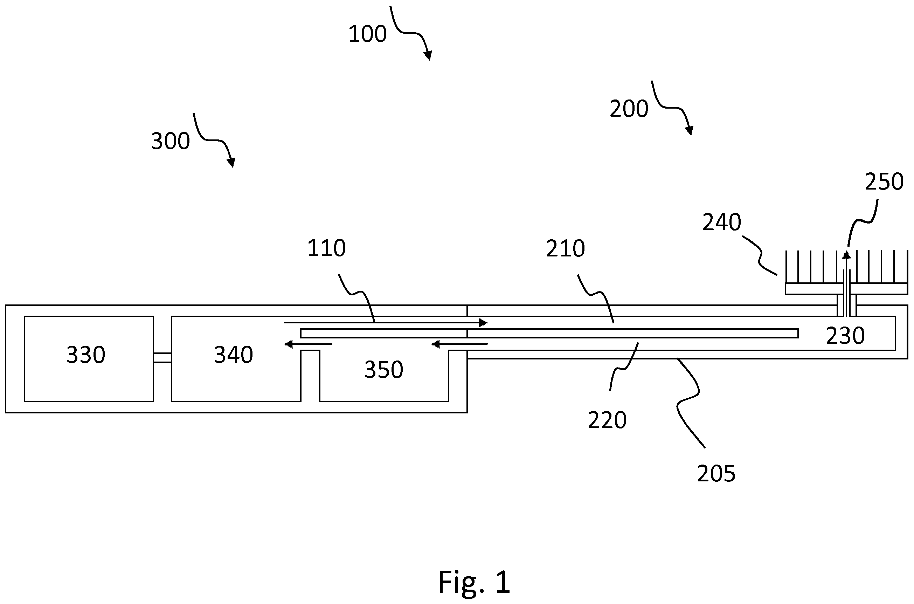

As will become apparent from this entire disclosure, the cleaning head of this aspect and every other embodiment mentioned herein, can be combined with and attached to a support unit, such that they build an oral cleaning system. This may easily be gathered from for example the embodiment shown in Figure 1 and explained hereinafter in more detail.

In an embodiment of the invention, the hydraulic motor is configured for driving the brush based on a fluid flow within the first fluid channel of the cleaning head.

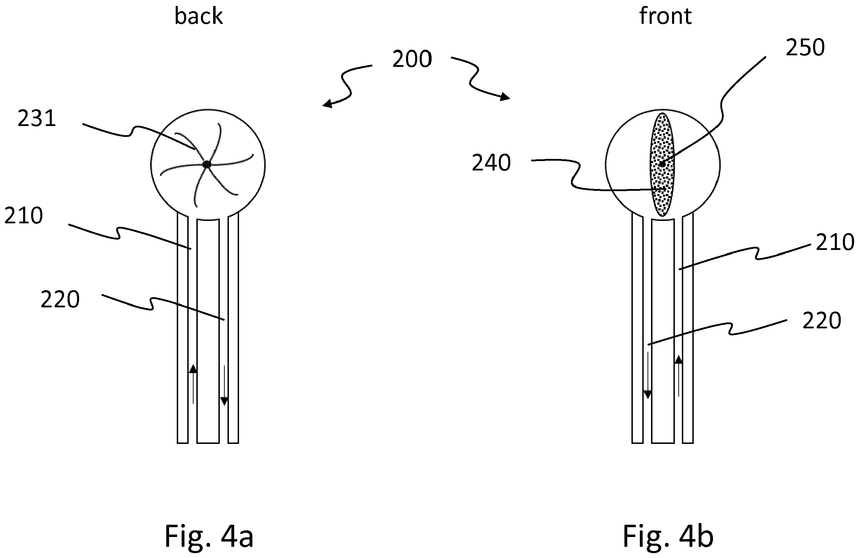

The flow of the fluid in the first fluid channel can be converted to mechanical movement in the cleaning head by means of a hydraulic motor. This hydraulic motor can comprise an impellor or a turbine, which rotates by means of the fluid flow. The rotation of the impellor or the turbine can be directly transmitted to a rotation of the brush. Alternatively, the rotation can be easily converted into an oscillation. The fluid stream can also immediately create side to side oscillations or other motions, depending on the hydraulic motor design. An exemplary embodiment of such a hydraulic motor is shown for example in Figure 4a and will be explained in more detail hereinafter.

In an embodiment of the invention, the cleaning head comprises at least one valve connected to the orifice and configured for allowing a fluid flow through the orifice into interdental space when the valve is in an open configuration.

This valve of the cleaning head can be located in between of the first fluid channel and the orifice. It is configured to be opened or closed thus allowing or stopping the fluid flowing through the orifice. This valve can allow the desired emission of fluid through the orifice only when the orifice is located opposite to an interdental space. Only at the position of an interdental space the fluid gets released through the orifice, thereby providing a fluid burst cleaning the interdental space. This fluid burst can be preferably a low-volume and high-pressure fluid burst, in order for effective cleaning with a low consumption of cleaning fluid.

Preferably, in an embodiment less than 20 ml is used for the cleaning of all interdental spaces. To dynamically clean the interdental space with fluid not much volume is required. 0.6 ml per interdental space and 18 ml in total for 30 spaces can be sufficient. For cleaning efficacy, a minimal fluid velocity of around 25 m/s is required, which corresponds to ca 3.1 bar in water pressure driven systems. To ensure optimal cleaning 35 to 45 m/s corresponding to ca 6.1 to 10.1 bar is advised when using these minimal fluid bursts. Beyond 50 m/s corresponding to ca 12.5 bar discomfort and possible soft tissue damage may occur. In order to stay at the preferred fluid volume of 0.6 ml per space, that is 0.3 ml per treatment side (e.g. buccal and lingual), the length of the jet pulse needs to be controlled. Additionally, in a preferred embodiment, the ramp up and ramp down of the jetting velocity occurs instantly, i.e. generating a block pulse fluid jet, so the full volume reaches its maximum cleaning potential. For a perfect block pulse the used volume V depends on the pulse time t and the average velocity U according to V = A x U x t, where A is the opening area of the orifice. For a typical oral irrigation orifice area A of 0.5 mm² and 40 m/s liquid velocity U, the maximum pulse time t would be limited to 15 ms to create a 0.3 ml shot. However, valve opening time may not always be well controlled, especially not in embodiments that do not electronically control the valve opening. So volumes may increase beyond 20ml. Area A may be further reduced to reduce the volume use. To still maintain a good cleaning footprint, the fluid may be broken in a spray or spread into fluid sheets. Additionally, the nozzle may move with the brush movement, increasing the fluid impact footprint.

It should be noted that the present invention as disclosed herein can also be applied in a mouthpiece rather than a 'standard' brush. Thus, the oral cleaning system as disclosed herein could be such a mouthpiece, in which the "cleaning head" is a first component of the mouthpiece and the "support unit" is a second component of said mouthpiece. Therefore, the support unit in this embodiment is the component of the mouthpiece which comprises the pump mechanism and the fluid reservoir as described herein. In other words the support unit in this embodiment would not be held during use by the user but would be part of the mouthpiece itself which is placed into the mouth for cleaning the teeth with a combination of brushing and interdental liquid cleaning as described herein in detail. The present invention of course also applies to the combination of a handle and the cleaning head, as is described in detail in the context of the figures.

In an embodiment of the invention, the valve is located within the hydraulic motor, and the cleaning head is configured for emitting the fluid through the valve, through the orifice and through the brush.

The valve can further be located within the hydraulic motor thus providing a fluid connection from the fluid within the hydraulic motor to the orifice. In this embodiment, the cleaning head can be configured such that the orifice is located within the brush thus emitting the fluid through the brush or from in between of the bristles of the brush. This can enable the user of the oral cleaning system to comfortably locate the orifice and its position relative to an interdental space.

In an embodiment of the invention, the oral cleaning system comprises an attachment section, wherein the attachment section is non-detachable from the support unit / the body. In an exemplary embodiment thereof the attachment is carried out by only a bristle plate replacement.

In an embodiment of the invention, the orifice and the valve are located between the hydraulic motor and an attachment section of the cleaning head, and the attachment section is configured to be attached to the support unit.

The valve can also be positioned such that it provides the orifice with the pressurized fluid in the first fluid channel, before a pressure of the fluid is reduced by the hydraulic motor. Thus the valve is in direct contact with the maximal pressure of the fluid. This enables the orifice to provide a jet of fluid with optimal pressure. Further, the cleaning head comprises an attachment section, which is configured to be attached to the support unit of the oral cleaning system. This attachment section allows in this embodiment of the invention to attach and to detach the cleaning head from the support unit, for example for purposes of cleaning or replacing the cleaning head. Further, the oral cleaning system can comprise an elongated neck connecting the support unit and the brushing section of the cleaning head. This neck facilitates the handling of the oral cleaning system and the insertion of the brushing section into the mouth of the user. The cleaning head can be configured to provide the attachment section either between support unit and neck or between brushing section and neck. Also the attachment section can be positioned within the neck. For means of replacing or renewing the brush, the brush can also be configured to be detachable from the cleaning head.

In an embodiment of the invention, the cleaning head comprises a sensor for detecting a spatial alignment of an interdental space with the orifice, and the cleaning head is configured for opening the valve when a spatial alignment of an interdental space with the orifice has been detected by the sensor.

In a simple system, the user may actuate the valve opening by for example pressing a button or opening the valve manually when tactile feedback tells him the nozzle is at an interdental space. Therefore, the orifice should not be hidden inside the brush, but should extend sufficiently to get the tactile feedback from the teeth. Alternatively, the brush has a specific tip, giving tactile feedback when being in the interdental space, and the orifice also located at this tip. Interdental liquid cleaning with an automated actuation of the valve can in this embodiment of the invention be enabled by using an appropriate interproximal space sensor. Such sensors can detect for example the larger distance from the sensor or the darker area of the interdental space, or they can sense a gum curvature. This sensor be can for example an optical sensor like a 2D or 3D camera with a recognition software or laser profiling. Further in can be an acoustic sensor for e.g. ultrasonic imaging, a mechanical sensor or any different physical measurement principle being able of detecting a contrast between teeth and interdental spaces. When the sensor detects the interdental space, the valve can be opened for example electrically or hydraulically as by inducing a pressure change by changing the power of a pumping system of the oral cleaning system.

In an embodiment of the invention, the sensor as described herein before is comprised in another part of the oral cleaning system like, for example, the support unit. Thus, the oral cleaning system comprises the sensor for detecting the spatial alignment of an interdental space with the orifice, and the oral cleaning system is configured for opening the valve when a spatial alignment of an interdental space with the orifice has been detected by the sensor. In an embodiment of the invention, the system comprises one or more sensors such as pressure sensors or pump motor power sensors inside the support unit and/or inside the cleaning head.

In an embodiment of the invention, the valve is configured to be opened by a manual, electrical or hydraulic actuator.

There are many different possible valve designs known. They can be actuated in many different ways. For example, a manual actuator, an electric actuator or a hydraulically driven actuator may be used. Further, the valve can be configured to be actuated manually by the user. Manual opening (or e.g. by biting, etc.) would enable a compact valve system, as the electric actuator is not needed, but this is less attractive to users, and may be too complicated for them to perform well. Further, many examples of electric valves are available in the art that may be suitable for use in this embodiment of the invention. The disadvantage of such valves may be the higher costs and complexity of needing electronics in the brush-head part. Additionally the valve needs to be small being inside the brush-head part of the system. Electronic valves typically are too large for this, so miniaturization would be needed for this application. The size is mostly needed for the motor/ actuator driving the opening of the valve, closing may be done by a spring system. Opening the valve using a hydraulic system of the fluid pressure can be more attractive, as that system is anyway available, and can be very compact. A hydraulic actuator to open the valve can be controlled by hydraulic pressure. Many valve designs are known in the art that need a certain threshold pressure to open, as for example duckbill valves. The valve needing a certain threshold force or pressure to open. When the pressure in the hydraulic system is temporarily increased, the force is high enough to open the valve. When the force drops it would close again, typically using a spring system. The valves could also operate in an inverted way, i.e. being closed during the normal high pressure mode in the hydraulic system, but opened by an elastic or spring force when the pressure drops in the system.

In an embodiment of the invention, the brush is configured to generate an increased brushing friction when brushing an interdental space thereby generating an increased hydraulic pressure of the fluid in the first fluid channel, and the valve is configured to be opened by or during the increased hydraulic pressure of the fluid.

A cleaning head with a hydraulically driven valve can in this embodiment of the invention be considered without a sensor, when the brush is designed to get an increased friction resistance in an interdental space. Increased friction resistance in an interdental space will for example be gained if the bristle trim simulates the concave shape of the interdental space, e.g. with a tapered line of tufts, which are fitting well in this interdental space. Due to a larger contact area of the bristles with the teeth in the interdental space compared to the outside surface of the teeth, the friction of the brush will be larger when at an interdental space. In an at least partial rotational movement, or in a side-to-side movement of the brush, the friction may additionally be larger than in an up and down movement. The increased friction will increase the back force pushing against the fluid in the hydraulic system, as the hydraulic motor will experience an inhibiting force, which will increase the pressure. The valve can be configured such that this pressure increase exceeds the threshold pressure of the valve, and induces automatic jetting at the interdental space. Preferably, for a more reliable operation, also a pressure sensor can be included in the hydraulic system before the hydraulic motor to detect this pressure change. When the pressure increases due to increased friction, the pressure sensor can induce the pump mechanism to provide an additional ramp-up of the pressure in order to surely effect a proper jet pulse in the interdental space. As alternative to a pressure sensor the electrical power going into the pump mechanism can be measured, which also increases with a pressure increase. A fluid jet can then be shot by briefly increasing the pressure in the hydraulic system, the pressure exceeding the elastic forces of the valve keeping it closed. When the pressure decreases to a normal brush driving pressure at an outer surface of a tooth, the valve closes again and stops the jetting.

It should be understood the feature of opening the valve "during the increased hydraulic pressure of the fluid" includes also the embodiment where the pressure is sensed in e.g. the support unit and then the opening is triggered in another way, e.g. with an increased pressure pulse. It will be understood by the person skilled in the art that the opening of the valve may thus take place during the time when the increased hydraulic pressure of the fluid is present.

In an embodiment of the invention, the cleaning head further comprises an interdental brush, the interdental brush is configured to brush an entrance of an interdental space, and the interdental brush is configured to be activated by the fluid emitted for interdental liquid cleaning.

In addition to the brush for brushing the teeth, the cleaning head comprises an interdental brush, which is configured to brush preferably an entrance of an interdental space in between the teeth, for example a visible part of interproximal surfaces of neighboring teeth. The emitted fluid of the interdental jet can be used also to actuate this separate brushing element aimed at brushing the interdental space entrance in this embodiment of the invention. At the interdental space a very high pressure burst of fluid is released. Although of a rather small mass the fluid is expelled at a very high velocity thus creating a high momentum. This impulse created by a regular release and removal of the fluid jet can be used to still further induce a brushing motion of the separate interdental brush. The forward momentum of the fluid burst will also induce a backward momentum of the orifice. When the orifice is attached to the movable interdental brush, this brush will therefore start to move. As these jetting events occur in this embodiment of the invention only at interdental spaces, a preferable feature can be to actuate an interdental brush with the fluid burst. The impulse can additionally initiate or enhance a resonant type of motion, increasing the amplitude of the specifically engineered small interdental brush. If repeated bursts are fired the interdental brush may be mounted on a spring that has the resonance frequency of the burst frequency, gaining high amplitudes of the interdental brush.

According to another aspect of the invention, there is provided a support unit for an oral cleaning system for cleaning teeth with a combination of brushing and interdental liquid cleaning. The support unit comprises a fluid reservoir for containing a fluid for interdental liquid cleaning, and a pump mechanism configured for pumping the fluid from the fluid reservoir into a first fluid channel of a cleaning head of the oral cleaning system when the support unit is attached to the cleaning head. The support unit is configured for receiving back at least a part of the fluid from a second fluid channel of the cleaning head and is configured for guiding said part of the fluid towards the fluid reservoir and/or towards a pump inlet of the pump mechanism.

As has been mentioned herein before, this support unit may be combined with the cleaning head to constitute the oral cleaning system.

The support unit for an oral cleaning system for cleaning teeth with a combination of brushing and interdental liquid cleaning can be attached to the attachment section of the cleaning head such that fluid provided by the support unit is forwarded to the first fluid channel of the cleaning head, and such that fluid received back from the second fluid channel of the cleaning head is preserved in a fluid reservoir of the support unit. For providing the fluid, the support unit comprises a pump mechanism, which is configured to receive fluid from the fluid reservoir and transport the fluid to the first fluid channel of the cleaning head attached to the support unit. In an alternative embodiment, the pump mechanism is configured to receive the fluid from the second fluid channel of the cleaning head and to provide pressurized fluid to a fluid reservoir, which in turn provides the first fluid channel of the cleaning head with pressurized fluid.

Many different pumps are known in the art, and the inventors have found that they can be used in this embodiment of the invention as pump mechanism. Reciprocating pumps, like for example plunger pumps that are typically used in irrigators, deliver a pulsatile pressure, so that the brush movement frequency can vary. This is not necessarily a disadvantage for cleaning, but for user experience a more constant pressure pump may be preferred. Rotary type positive displacement pumps are a preferred choice, as they can be self-priming and have a continuous pressure output. Another advantage of such a rotary pump system is that it can more efficiently drive the hydraulic motor, as the return flow, which has still kinetic energy, can be an input to the pump, thus re-using the remaining energy in a closed loop system. Since the closed loop can lose fluid when shooting in the interdental spaces, the circuit needs to be refilled from the fluid reservoir. This might be a problem in a closed loop system if the pressure is everywhere above atmospheric pressure, as the liquid reservoir will be at atmospheric pressure. To prevent needing another pump to replenish the fluid in the pressurized fluid circuit, a Venturi design can be used.

In an embodiment of the invention, the support unit comprises an energy source for providing the pump mechanism with energy.

Preferably, the pump mechanism is an electrically driven pump, which uses electric power to pump the fluid. As energy source a battery or a rechargeable battery can be used to provide a cordless oral cleaning system as preferred by most users. However, also an electric connection to a wall socket can be possible.

In an embodiment of the invention, the support unit comprises an attachment section, the attachment section comprises a first opening configured to be fluidly connected to the first fluid channel of the cleaning head of the oral cleaning system when the support unit is attached to the cleaning head, and a second opening configured to be fluidly connected to the second fluid channel of the cleaning head of the oral cleaning system when the support unit is attached to the cleaning head.

The attachment section of the support unit is configured to be attached to the attachment section of the cleaning head such that the first fluid channel of the cleaning head is fluidly connected to a first opening of the support unit, and that the second fluid channel of the cleaning head is fluidly connected to a second opening of the support unit. The first opening is configured to provide pressurized fluid from the pump mechanism. The second opening is configured to receive fluid from the second fluid channel and to pass the fluid to on to the fluid reservoir of the support unit.

In an embodiment of the invention, the support unit is a handle. This handle can be configured to be held in the hand of a user of the oral cleaning system. The user can move the cleaning head relative to the teeth by guiding it by means of the handle.

According to another aspect of the invention, there is provided an oral cleaning system for cleaning teeth with a combination of brushing and interdental liquid cleaning. The oral cleaning system comprises a cleaning head according to any of the preceding embodiments, and a support unit according to any of the preceding embodiments, wherein the support unit is attached to the cleaning head. The system may have, of course, other additional components as will be described in more detail herein.

This oral cleaning system for cleaning teeth with a combination of brushing and interdental liquid cleaning comprises a cleaning head and a support unit as described in previous embodiments. An advantage of this oral cleaning system compared to the state of the art is for example that a large amount of energy can be transferred from the support unit to the cleaning head using hydraulic fluid, eradicating the need of complicated and prone to failure mechanical energy transfer. The brush can be displaced in all kind of different motions depending on the mechanical design. Further, the hydraulic system brings high-pressure fluid continuously to the cleaning head, which can be easily tapped to create a brief interdental liquid cleaning burst. As the burst is only created at the interdental space, the fluid volume of the fluid reservoir can be limited to below 50ml, and preferably below 20ml for a full treatment of all teeth and especially all interdental spaces. Even further, the hydraulic system offers a lot of design freedom to add for example brushes with independent brush motions and even multi-surface brushes. Multi-surface brushes can be provided where a lingual brush moves differently from a buccal/labial brush and again differently from an occlusal brush, optimizing motions for all different tooth surfaces.

In an embodiment of the invention, the oral cleaning system comprises a plurality of cleaning heads according to any of the preceding claims, each of the cleaning heads is configured to clean a separate surface of a tooth, and the oral cleaning system is configured to clean the separate surfaces of the tooth or multiple teeth simultaneously.

An oral cleaning system can be provided, which comprises a plurality of, preferably three, cleaning heads connected to one support unit. This offers the possibility to clean different surfaces of a tooth at the same time with one oral cleaning system. Multi-surface cleaning systems can be provided where a lingual brush moves differently from a buccal/labial brush and again differently from an occlusal brush, optimizing motions for all different tooth surfaces. Hydraulic motors or actuators can be very small, since no magneto-electric components are needed. Therefore, multiple hydraulic motors or actuators could be placed in the brush head driven by a single pump in the support unit, for independent movement of different brushes or brush sections. This gives many advantages of this invention for multi-brush systems. For example, 3 or 6 brush systems can be designed, but also brushes with differently moving sections. Even full dentition brushing mouthpieces using a multitude of brushes can be designed. Further, this enables to use an optimal brushing motion for each tooth section. And it allows for multi-brush flexibility, as the different brushes do not need to be in a rigid connection, needed when mechanically driven on one shaft. This can give a more comfortable feeling to the user, and can improve cleaning because of the better adaptive fit to the individual anatomy in the mouth of a user. Flexibility for user comfort is a big need in such oral cleaning concepts, as the main user complaint of marketed multi-brush systems is the discomfort during use.

Since this embodiment covers also systems for multiple teeth this also includes larger cleaning systems, for example full mouth applications.

In an embodiment of the invention the oral cleaning system comprises two opposing brushes, configured to clamp on the teeth with a certain clamping force, and configured for sensing of the interdental space e.g. by detecting the distance between the brushes or the clamp angle.

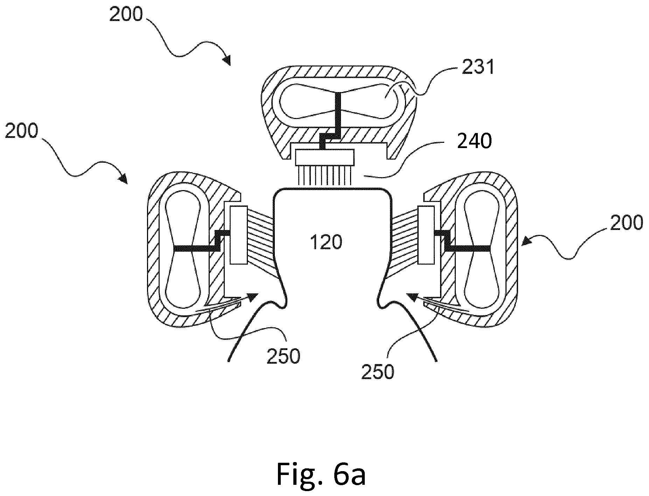

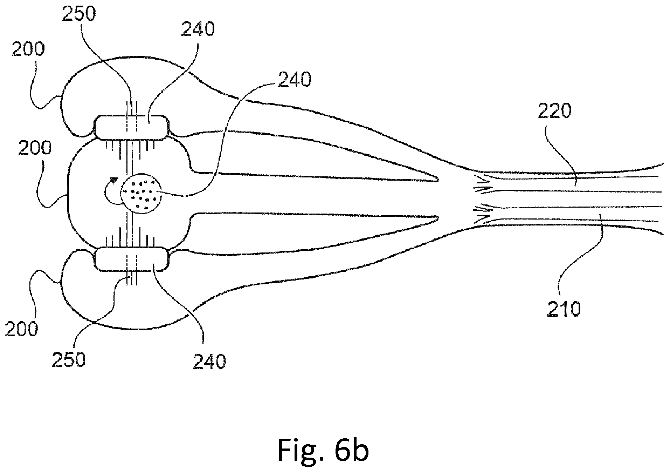

On the side surfaces of the teeth, the two brushes will be further apart, but at an interdental space they are closer together, having a smaller clamp angle. This works best using a narrow vertical brush design, for example a line of tufts. If such a brush is moving, the clamp would start vibrating more heavily in the interdental space, which can also be detected by a vibration sensor, a pressure sensor or the signal of the electrical power to the pump. Such an embodiment will be described in more detail in the context of the embodiment shown in Figure 6a and 6b.

According to another aspect of the invention, there is provided a method for cleaning teeth with a combination of brushing and interdental liquid cleaning. The method comprises the steps of pumping a fluid from a fluid reservoir in a support unit through a first fluid channel to a cleaning head connected with the support unit, actuating a hydraulic motor with the fluid thereby driving a brush of the cleaning head for cleaning teeth, emitting fluid for interdental liquid cleaning through an orifice of the cleaning head, and guiding back at least a part of the fluid from the cleaning head through a second fluid channel into the fluid reservoir.

Pursuant to the method for cleaning teeth with a combination of brushing and interdental liquid cleaning, a fluid is pumped from a reservoir by a pump mechanism through a first fluid channel of a cleaning head to a hydraulic motor. The pressurized fluid is used to rotate the hydraulic motor, which in turn drives a brush for cleaning teeth. A part of the fluid can be emitted, controlled by a valve, through an orifice in order to liquid clean interdental spaces with a jet of fluid. Another part of fluid is guided back from the hydraulic motor through a second fluid channel into the reservoir of the support unit, where it is preserved and can be conducted to the pump mechanism again.

Advantageously, the benefits provided by any of the above aspects equally apply to all of the other aspects and vice versa.

The above aspects and embodiments will become apparent from and be elucidated with reference to the exemplary embodiments described hereinafter. Exemplary embodiments of the invention will be described in the following with reference to the following drawings:

### BRIEF DESCRIPTION OF THE DRAWINGS

Fig. 1 shows a schematic set-up of an oral cleaning device according to a first exemplary embodiment of the invention.
Fig. 2 shows a schematic set-up of a cleaning head according to a second exemplary embodiment of the invention.
Fig. 3 shows a schematic set-up of a handle according to a third exemplary embodiment of the invention.
Fig. 4a shows a rear view of a schematic set-up of a cleaning head according to a fourth exemplary embodiment of the invention.
Fig. 4b shows a front view of a schematic set-up of a cleaning head according to the fourth exemplary embodiment of the invention.
Fig. 5 shows a top view of a schematic set-up of a cleaning head according to the fourth exemplary embodiment of the invention while cleaning teeth.
Figs. 6a and 6b show different views of a schematic set-up of a multi-brush oral cleaning system comprising three cleaning heads according to a fifth exemplary embodiment of the invention while cleaning teeth.
Fig. 7 shows a schematic set-up of an interdental brush system with an interdental brush driven by a fluid jet according to a sixth embodiment of the invention.

### DETAILED DESCRIPTION OF EMBODIMENTS

Fig. 1 shows a schematic set-up of an oral cleaning device 100 according to a first exemplary embodiment of the invention. The oral cleaning device comprises a cleaning head 200 and a handle 300. The handle holds the energy source 330, for example batteries, which empower the pump mechanism 340. An electronic circuit can be present to allow the user to control the pump mechanism through buttons for on-off operation, or different power or mode settings. The handle 300 also houses a fluid reservoir, from which fluid flows into the pump, which subsequently pressurizes the fluid through a first liquid channel 210 towards the cleaning head 200. An elongated part, the neck 205, extends from the handle 300 to the cleaning head 200, and allows easy access of the cleaning head 200 into the oral cavity. The neck 205 may be taken off with the cleaning head to replace the cleaning head 200, as it is custom with most power toothbrushes, but it may also be a permanently to the handle 300 connected neck 205, when only the brush 240 itself is replaced. The pressurized fluid 110 powers a hydraulic motor 230, which drives the brushing motion of the brush 240. The motion can have many forms, depending on the design of the movement transition. A typical hydraulic motor 230 will have an impeller 231 that rotates driven by the pressure difference over the impeller 231. The rotation may be directly transferred to the brush 240 thus rotating it, but through different constructions known in the art the rotation could also be transferred to sideway oscillations or even pulsations. The pressure of the fluid 110 is additionally used to drive a fluid burst ejection from the cleaning head 200, aimed at cleaning the interdental spaces 130. Preferably, the amount of fluid 110 used to clean the total of the interdental spaces 130 is limited to no more than 100 ml, but preferably less than 20 ml, so users do not have to spit too much, losing their fluoride from the toothpaste, and being in discomfort. Also volume of the fluid reservoir 350 needs to be small enough to allow easy handling of the toothbrush. One way to achieve low volume use is to limit the fluid bursts to the position of the interdental spaces 130, whereas only some additional shooting might be acceptable. The part of the fluid 100 that is not emitted through the orifice 250 for cleaning the interdental spaces 130 is guided back through a second fluid channel 220 to the handle 300 and received in the fluid reservoir 350.

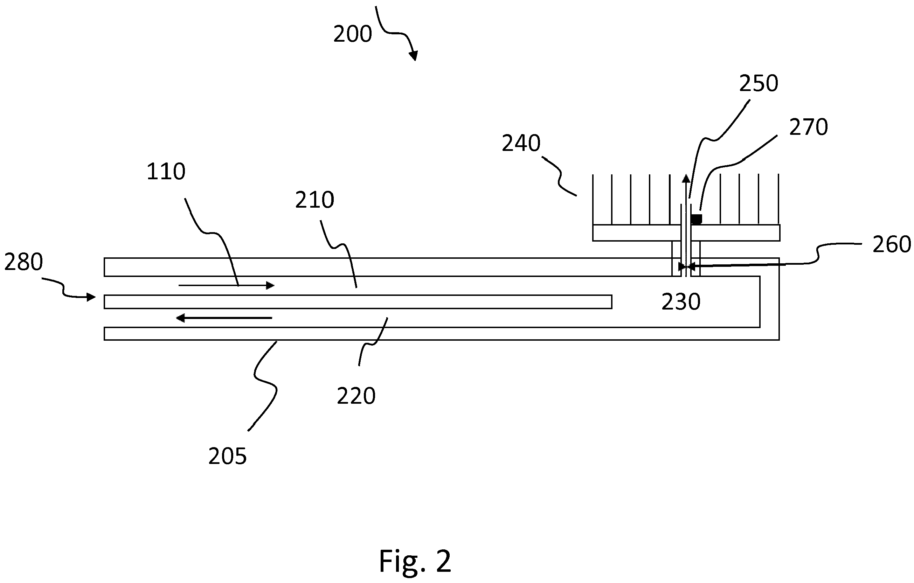

Fig. 2 shows a schematic set-up of a cleaning head 200 according to a second exemplary embodiment of the invention. In this exemplary embodiment, the cleaning head 200 is detached from the handle 300. The attachment section 280 is not connected to a handle 300. Further, the valve 260 is shown, which is configured for allowing the fluid 110 flow through the orifice 250 into interdental space 130 when the valve 260 is in an open configuration. When the valve 260 is closed, all of the fluid 110 used to empower the hydraulic motor 230 is guide back through the second fluid channel 220 to be received by the fluid reservoir 350. Furthermore, a sensor 270 is shown, which is mounted in this exemplary embodiment of the invention to the brush. This sensor 270 is configured to detect a spatial alignment of the cleaning head 200 and in particular of the orifice 250 with an interdental space 130.

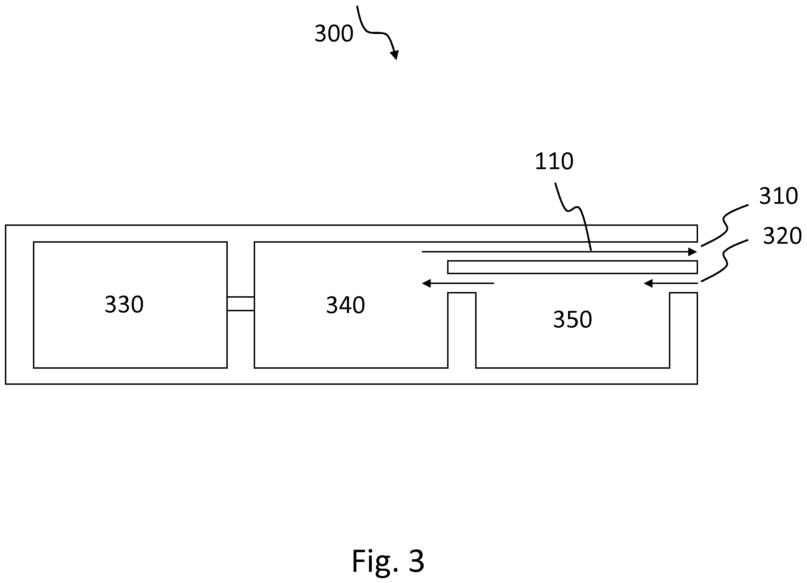

Fig. 3 shows a schematic set-up of a handle 300 according to a third exemplary embodiment of the invention. The handle 300 is shown with no cleaning head 200 attached to the handle 300. Thus the first opening 310 and the second opening 320 are shown in the figure, which are configured to be connected to the first fluid channel 210 and to the second fluid channel 220, respectively. This fluid connection is configured to enable the fluid 110 flow from the pump mechanism 340 of the handle 300 through the first fluid channel 210 to the cleaning head 200, and to enable the fluid 100 flow back from the cleaning head 200 through the second fluid channel 220 into the fluid reservoir 350 of the cleaning head 300.

Fig. 4a shows a rear view of a schematic set-up of a cleaning head 200 according to a fourth exemplary embodiment of the invention. In this rear view, the impeller 231 of the hydraulic motor 230 is shown, which is configured to be driven by the fluid flow from the first fluid channel 210 to the second fluid channel 220.

Fig. 4b shows a front view of a schematic set-up of a cleaning head according to the fourth exemplary embodiment of the invention. The brush 240 is shown, which in this exemplary embodiment of the invention has an elongated shape. The brush is driven by the rotation of the impeller 231 of the hydraulic motor 230, and can for example also be rotating. In the center of the brush 240 located is the orifice 250 for emitting fluid thereby cleaning interdental spaces 130 by means of a fluid jet.

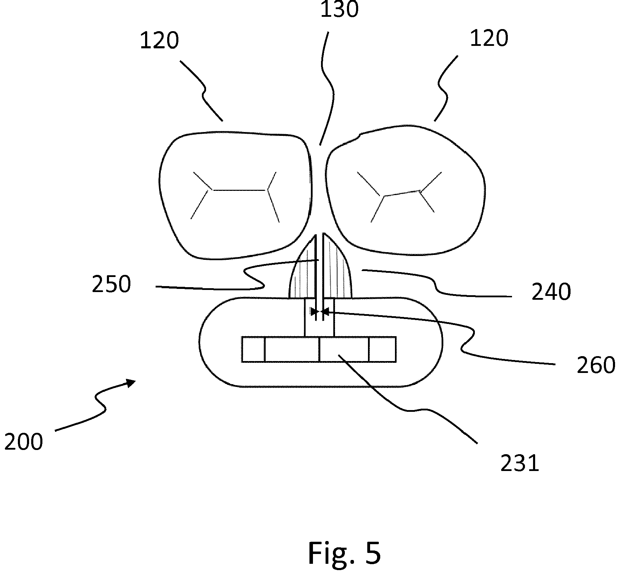

Fig. 5 shows a top view of a schematic set-up of a cleaning head according to the fourth exemplary embodiment of the invention while cleaning teeth. In this top view of the exemplary embodiment of the invention shown also in figures 4a and 4b, the elongated brush 240 of the cleaning head 200 is shown when aligned with an interdental space 130 between two teeth 120. The brush can freely rotate on the outside of the teeth 120, but in the interdental space 130 it can be trapped, increasing the resistance due to friction. By means of the elongated shape of the brush 240, which is fitted to the elongated shape of the entrance of the interdental space 130, a rotation of the brush 240 is obstructed. The rotation of the brush 240 experiences an increased resistance or friction, when the brush is rotated across the interdental space 130. Thus, also the rotation of the impeller 231 of the hydraulic motor 230 is inhibited, which results in a pressure increase of the fluid 110. The increased pressure of the fluid 110 can exceed the threshold of the valve 260 and can be emitted through the orifice 250, thereby cleaning the interdental space 130.

Figs. 6a and 6b show different views of a schematic set-up of a multi-brush oral cleaning system comprising three cleaning heads 200 according to a fifth exemplary embodiment of the invention while cleaning teeth 120. A triple brush system to brush inner, outer and occlusal tooth surfaces is shown, where the three brushes 240 are driven each by a compact hydraulic motor 230. Three tooth surfaces are brushed simultaneously by the brushes 240, and the interdental space 130 is cleaned from both sides by fluid 110 emitted through the orifices 250. Thereby, the treatment time is considerably reduced. The impellers 231 of the hydraulic motors 230 are drawn quite large but may be designed more compact for user comfort, thus reducing also the size of the cleaning heads 200. As the neck of the cleaning heads 200 do not require to transfer mechanical energy, the neck can be relatively flexible, allowing a comfortable adaptation of the cleaning heads 200 to the dentition and a much more comfortable experience using this oral cleaning system. For example the neck 205 of the occlusal cleaning head can be rigid, which allows the user to control the pressure on the occlusal surfaces, which does not compromise comfort. The inner (lingual) and outer (buccal/labial) cleaning head 200 brushing pressure can be controlled by the spring characteristics of the necks of these cleaning heads 200, which can be chosen freely to optimize both comfort and cleaning. For example, an optimized force of 0.5 to 2 N for each brush 240, depending on the brush size can be provided. This would ensure gum comfort, since the user cannot over pressure the side brushes that touch the gums. The fluid bursts can be emitted from the bottom side of the side brushes, but could also be chosen to eject from the middle when the brush has a hollow brush axis or from the top pointing downward to clean also the sulcus. Also multiple jets can be combined. It can also be beneficial if a burst ejects from the occlusal side, cleaning the interdental space 130 top-down. In this type of oral cleaning system 100 where two opposing brushes 240 clamp on the teeth 120 with a certain clamping force, sensing of the interdental space 130 can also be done by detecting the distance between the brushes 240 or the clamp angle. On the side surfaces of the teeth 120, the two brushes 240 will be further apart, but at an interdental space 130 they are closer together, having a smaller clamp angle. This works best using a narrow vertical brush design, for example a line of tufts. If such a brush 240 is moving, the clamp would start vibrating more heavily in the interdental space 130, which can also be detected by a vibration sensor, a pressure sensor or the signal of the electrical power to the pump. The first fluid channel 210 and the second fluid channel 220 leading/guiding from and to a handle 300 depicted Fig. 6b can comprise a branching, in order to provide every cleaning head 200 with fluid 110.

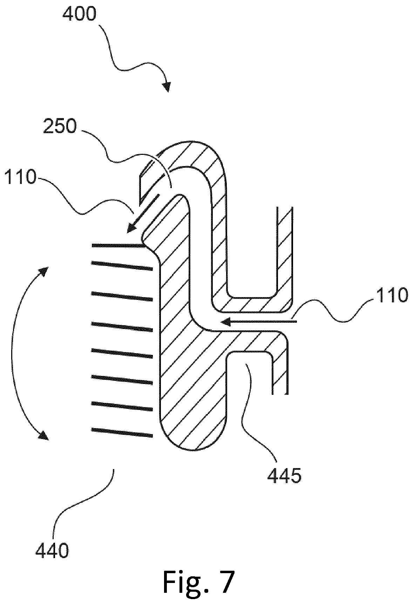

Fig. 7 shows a schematic set-up of an interdental brush system 400 with an interdental brush 440 driven by a fluid jet according to a sixth embodiment of the invention. The interdental brush 440 is mounted on a spring 445 or on a flexible part of a basis of the interdental brush 440. Thus, a resonant movement of the interdental brush 440 is enabled, which will occur when excited by an impulse. A fluid burst can be a hydraulic actuator of the interdental brush 440. As the burst of fluid 110 is ejected from one side of the interdental brush 440 through the orifice 250, the interdental brush 440 will be pushed back or forth, and will vibrate with its resonance frequency. Preferably, this resonant oscillation takes place in a direction along the interdental space, thus providing additional brushing of tooth surfaces at the entrance of the interdental space 130.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. The mere fact that certain measures are re-cited in mutually different dependent claims does not indicate that a combination of these measures cannot be used to advantage. Any reference signs in the claims should not be construed as limiting the scope.

### LIST OF REFERENCE SIGNS:

- 100: oral cleaning system
- 110: fluid
- 120: tooth
- 130: interdental space
- 200: cleaning head
- 205: neck
- 210: first fluid channel
- 220: second fluid channel
- 230: hydraulic motor
- 231: impeller
- 240: brush
- 250: orifice
- 260: valve
- 270: sensor
- 280: attachment section
- 290: interdental brush
- 300: support unit/handle
- 310: first opening
- 320: second opening
- 330: energy source
- 340: pump mechanism
- 350: fluid reservoir
- 400: interdental brush system
- 440: interdental brush
- 445: spring

## Claims

1. A cleaning head (200) for an oral cleaning system (100) for cleaning teeth (120) with a combination of brushing and interdental liquid cleaning, the cleaning head (200) comprising:
- a brush (240) for brushing the teeth (120),
- an orifice (250) for emitting a fluid (110) for interdental liquid cleaning,
- a hydraulic motor (230) for driving the brush (240),
- a first fluid channel (210) configured for transporting the fluid (110) from a support unit (300) of the oral cleaning system (100) to the hydraulic motor (230), when the cleaning head (200) is attached to the support unit (300) of the oral cleaning system (100), and
- a second fluid channel (220) configured for transporting at least a part of the fluid (110) back from the hydraulic motor (230) to the support unit (300) when the cleaning head (200) is attached to the support unit (300) of the oral cleaning system (100).

2. Cleaning head (200) according to claim 1,
wherein the hydraulic motor (230) is configured for driving the brush (240) based on a fluid flow within the first fluid channel (210) of the cleaning head (200).

3. Cleaning head (200) according to any of claims 1 or 2,
wherein the cleaning head (200) comprises at least one valve (260) connected to the orifice (250) and configured for allowing a fluid (110) flow through the orifice (250) into interdental space (130) when the valve (260) is in an open configuration.

4. Cleaning head (200) according to claim 3,
wherein the valve (260) is located within the hydraulic motor (230), and wherein the cleaning head (200) is configured for emitting the fluid (110) through the valve (260), through the orifice (250) and through the brush (240).

5. Cleaning head (200) according to claim 3,
wherein the orifice (250) and the valve (260) are located between the hydraulic motor (230) and an attachment section (280) of the cleaning head (200), and
wherein the attachment section (280) is configured to be attached to the support unit (300).

6. Cleaning head (200) according to any of claims 3 to 5,
wherein the cleaning head (200) comprises a sensor (270) for detecting a spatial alignment of an interdental space (130) with the orifice (250), and
wherein the cleaning head (200) is configured for opening the valve (260) when a spatial alignment of an interdental space (130) with the orifice (250) has been detected by the sensor (270).

7. Cleaning head (200) according to any of claims 3 to 6,
wherein the valve (260) is configured to be opened by a manual, electrical or hydraulic actuator.

8. Cleaning head (200) according to any of claims 3 to 5,
wherein the brush (240) is configured to generate an increased brushing friction when brushing an interdental space (130) thereby generating an increased hydraulic pressure of the fluid (110) in the first fluid channel (210), and
wherein the valve (260) is configured to be opened during the increased hydraulic pressure of the fluid (110).

9. Cleaning head (200) according to any of the preceding claims,
wherein the cleaning head (200) further comprises an interdental brush (290), wherein the interdental brush (290) is configured to brush an entrance of an interdental space (130), and
wherein the interdental brush (290) is configured to be activated by the fluid (110) emitted for interdental liquid cleaning.

10. A support unit (300) for an oral cleaning system (100) for cleaning teeth (120) with a combination of brushing and interdental liquid cleaning, the support unit (300) comprising:
- a fluid reservoir (350) for containing a fluid (110) for interdental liquid cleaning,
- a pump mechanism (340) configured for pumping the fluid (110) from the fluid reservoir (350) into a first fluid channel (210) of a cleaning head (200) of the oral cleaning system (100) when the support unit (300) is attached to the cleaning head (200), and
wherein the support unit (300) is configured for receiving back at least a part of the fluid (110) from a second fluid channel (220) of the cleaning head (200) and is configured for guiding said part of the fluid (110) towards the fluid reservoir (350) and/or directly towards a pump inlet of the pump mechanism.

11. Support unit (300) according to claim 10,
wherein the support unit (300) comprises an energy source (330) for providing the pump mechanism (340) with energy.

12. Support unit (300) according to any of claims 10 or 11,
wherein the support unit (300) comprises an attachment section,
wherein the attachment section comprises
- a first opening (310), configured to be fluidly connected to the first fluid channel (210) of the cleaning head (200) of the oral cleaning system (100) when the support unit (300) is attached to the cleaning head (200), and
- a second opening (320) configured to be fluidly connected to the second fluid channel (220) of the cleaning head (200) of the oral cleaning system (100) when the support unit (300) is attached to the cleaning head (200).

13. Support unit (300) according to any of claims 10 to 12,
wherein the support unit (300) is a handle.

14. Oral cleaning system (100) for cleaning teeth (120) with a combination of brushing and interdental liquid cleaning, the oral cleaning system (100) comprising:
- a cleaning head (200) according to any of claims 1 to 9,
- a support unit (300) according to any of claims 10 to 13, and
wherein the support unit (300) is attached to the cleaning head (200).

15. Oral cleaning system (100) according to claim 14,
wherein the oral cleaning system (100) comprises a plurality of cleaning heads (200) according to any of claims 1 to 9, wherein each of the cleaning heads (200) is configured to clean a separate surface of a tooth (120), and
wherein the oral cleaning system (100) is configured to clean the separate surfaces of the tooth or multiple teeth (120) simultaneously.

16. A method for cleaning teeth (120) with a combination of brushing and interdental liquid cleaning, the method comprising the steps of:
- pumping a fluid (110) from a fluid reservoir (350) in a support unit (300) through a first fluid channel (210) to a cleaning head (200) connected with the support unit (300),
- actuating a hydraulic motor (230) with the fluid (110) thereby driving a brush (240) of the cleaning head (200) for cleaning teeth (120),
- emitting fluid (110) for interdental liquid cleaning through an orifice (250) of the cleaning head (200), and
guiding back at least a part of the fluid (110) from the cleaning head (200) through a second fluid channel (200) into the fluid reservoir (350).
